# FASCICULE DE BREVET EUROPEEN

(11) **EP 2 392 203 B1**
(45) Date de publication et mention de la délivrance du brevet: **09.10.2013**
(21) Numéro de dépôt: 11168021.1
(22) Date de dépôt: 30.05.2011
(51) Int. Cl.: A01B 33/12

(54) **Machine de travail du sol dont la poutre du carter présente une glissière longitudinale**
Bodenbearbeitungsmaschine mit einem Gehäuse das eine Läugsbahn aufweist
Soil working machine with a gearbox having a longitudinal slide

(30) Priorité: 31.05.2010 FR 1054195
(43) Date de publication de la demande: 07.12.2011
(73) Titulaire: KUHN S.A., 67700 Saverne (FR)
(72) Inventeur: Teitgen, Hervé, 57370 Phalsbourg (FR); Potier, Philippe, 57370 Veckersviller (FR)
(74) Mandataire: Esch, Esther Evelyne

(56) Documents cités:
- EP-A1- 0 264 994
- EP-A2- 0 511 688
- DE-A1- 2 621 265
- DE-A1-102008 039 998
- FR-A1- 2 209 491
- FR-A1- 2 447 134

## Description

La présente invention se rapporte au domaine technique général du machinisme agricole et notamment aux machines agricoles destinées à travailler le sol. L'invention concerne une machine agricole de travail comportant un carter transversal à la direction d'avance durant le travail, supportant des outils de travail montés sur des rotors susceptibles de tourner autour d'un axe respectif sensiblement vertical, ledit carter présentant une poutre.

Une telle machine de travail du sol présentant un carter, des rotors munis d'outils de travail est connue par le document DE10 2008 039 998. Cette machine agricole est une herse rotative dont le carter s'étend transversalement à la direction d'avance pendant le travail. Des rotors portant les outils de travail sont montés rotatifs sur le carter via des paliers. L'animation des rotors se fait via des organes d'entraînement logés dans le carter formé par une poutre et un couvercle assemblés au moyen de boulons de serrage. Cette machine agricole est équipée, à l'avant, de protecteurs et d'effaceurs de traces. L'effaceur de traces prend appui entre la partie supérieure de la poutre et le protecteur monté dans la partie inférieure de la poutre. Pour que le travail de l'effaceur de traces soit efficace, il est maintenu entre le carter et le protecteur par un support. Le support est vissé sur le protecteur et sur la partie supérieure du carter. La position latérale de l'effaceur de traces par rapport au carter peut être modifiée grâce aux perçages permettant de fixer le couvercle sur la poutre. Le réglage latéral n'est possible qu'avec un pas important et un démontage complet des boulons. Un réglage plus fin est obtenu grâce à la plaque intermédiaire implantée entre la partie supérieure du carter et le support. Cette plaque intermédiaire est pourvue de perçages avec un pas réduit. La plaque du protecteur présente également différents perçages distants d'un pas plus petit.

Sur une autre machine agricole connue, les effaceurs de traces sont montés sur le carter par l'intermédiaire d'un tube transversal. Ce tube transversal est fixé sur la partie supérieure du carter via des supports. L'effaceur de traces est monté sur un tube transversal respectif à l'aide de brides, le tube transversal s'étendant au-dessus du carter. Les brides permettent une adaptation plus précise de la position latérale de l'effaceur de traces sur le tube spécifique. Par contre, ce type de fixation nécessite également des pièces spécifiques, notamment un tube transversal et des supports. Les supports fixés sur la partie supérieure du carter créé des zones de rétention de terre. La terre ainsi accumulée sur le carter demande une opération de nettoyage manuelle.

La présente invention a pour but de remédier aux inconvénients précités. Elle doit notamment proposer une machine agricole de travail du sol sur laquelle la position d'un équipement peut être aisément et rapidement adaptée en fonction de la voie du tracteur sans utilisation de pièces supplémentaires.

A cet effet, une importante caractéristique de l'invention consiste en ce que la poutre présente une glissière longitudinale apte à recevoir au moins un équipement, ladite glissière s'étend au moins sur une partie du flanc de la poutre et présente au moins une rainure. Grâce à ces caractéristiques, l'équipement peut être monté directement sur la poutre et ne nécessite plus l'utilisation de pièces supplémentaires. Avec la glissière longitudinale, la position latérale de l'équipement peut être adaptée au mieux c'est-à-dire tout au long de la glissière, rapidement et en continu et sans limitation. Par ailleurs, la glissière apporte aussi une rigidité en flexion pour la poutre.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente, en vue de côté, une machine agricole de travail du sol avec une poutre selon la présente invention,
- la **figure 2** représente une partie de la machine agricole de travail du sol de la figure 1 en perspective,
- la **figure 3** représente en perspective une partie de la machine agricole de travail du sol de la figure 1 en vue de dessous,
- la **figure 4** représente en vue de côté, à plus grande échelle, un carter avec une poutre selon l'invention,
- la **figure 5** représente une vue de côté d'un carter avec une poutre selon un autre exemple de réalisation.

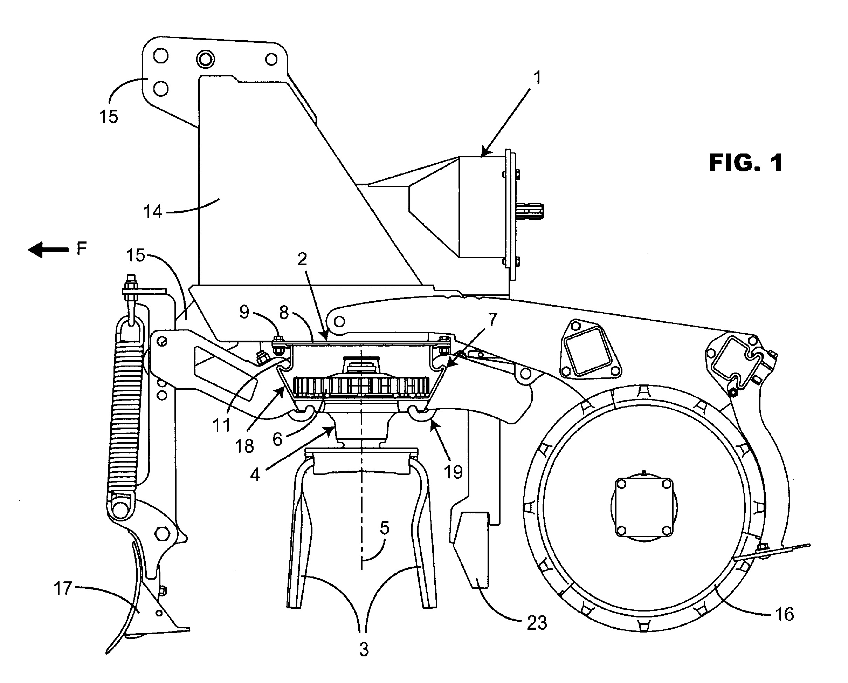

Telle qu'elle est représentée sur la figure 1, la machine agricole de travail du sol (1) selon l'invention comporte un carter (2) s'étendant transversalement à la direction d'avance (F) pour le travail. Le carter (2) supporte des outils de travail (3) qui sont montés sur des rotors (4) susceptibles de tourner autour d'un axe respectif sensiblement vertical (5). Les outils de travail (3) sont constitués d'une partie de travail et d'une partie de liaison. La partie de travail et la partie de liaison s'étendent, de préférence, selon des directions sensiblement perpendiculaires de manière à réaliser une forme globale coudée.

Dans le carter (2) sont agencés des organes d'entraînement (6) qui ont pour fonction de transmettre un mouvement de rotation par exemple d'une prise de force d'un tracteur (non représenté) vers les rotors (4) orientés chacun selon un axe respectif sensiblement vertical (5) durant le travail. Le carter (2) présente une poutre (7) et un couvercle (8) assemblés à l'aide de moyens de fixation (9) tels que des boulons. Le profil de la poutre (7) comporte une base (10), un flanc (11) de part et d'autre de la base (10) et des rebords (12). Chaque flanc (11) se termine par un rebord (12). La base (10) et les rebords (12) s'étendent sensiblement horizontalement et les flancs (11) s'étendent globalement verticalement, ils s'étendent entre la base (10) et les rebords (12). Les rebords (12) sont destinés à recevoir et supporter le couvercle (8). Le carter (2) contient du lubrifiant en vue d'assurer le graissage des organes d'entraînement (6), il doit être étanche afin d'éviter des pertes de lubrifiant et la pénétration d'eau et de poussière. Pour assurer l'étanchéité du carter (2), un moyen d'étanchéité (13) est prévu entre la poutre (7) et le couvercle (8). La poutre (7) présente également des plaques destinées à fermer chaque extrémité latérale. Ces plaques ne sont pas représentées sur les figures 1 à 4.

La machine (1) représentée est une herse rotative destinée à la préparation de lit de semences. Afin de pouvoir être déplacée, la machine comporte un cadre (14) pourvu d'un dispositif d'attelage trois points (15) à un tracteur. A l'arrière de la machine (1) est prévu un organe de référence (16) tel qu'un rouleau pour le contrôle de la profondeur de travail des outils. Le rouleau a aussi pour fonction de rappuyer le sol et de compléter l'émiettement. Le rouleau est relié au cadre (14) au moyen de bras. La herse rotative est munie à l'avant du carter (2) d'un équipement tel que des effaceurs de traces (17). Un effaceur de traces (17) a pour fonction d'ameublir le sol dans le sillage de la roue du tracteur. La position latérale de l'effaceur de traces (17) peut être adaptée.

Selon une importante caractéristique de l'invention, la poutre (7) présente au moins une glissière longitudinale (18) apte à recevoir au moins un équipement (17, 23), ladite glissière longitudinale (18) s'étend au moins sur une partie du flanc (11) de la poutre (7) et présente au moins une rainure (20). Grâce à cette glissière longitudinale (18), l'équipement est monté directement sur le flanc (11) par l'intermédiaire d'un dispositif de fixation (19). La glissière longitudinale (18) permet d'une part de guider le mouvement de translation et de fixer l'équipement, d'autre part. De cette manière, la partie supérieure du carter (2), et notamment le couvercle (8), est affranchie d'éléments de fixation entraînant une accumulation de terre sur le carter (2). La poutre (7) et la glissière (18) s'étendent transversalement à la direction d'avance (F) au cours du travail. La longueur de la poutre (7) ou du carter (2) correspond sensiblement à la largeur de travail de la machine (1). Grâce à la glissière longitudinale (18), la rigidité en flexion de la poutre (7) est améliorée. Une telle glissière longitudinale (18) permet d'augmenter l'inertie en flexion de la poutre (7) sans augmentation de son poids, l'épaisseur de la poutre (7) est réduite.

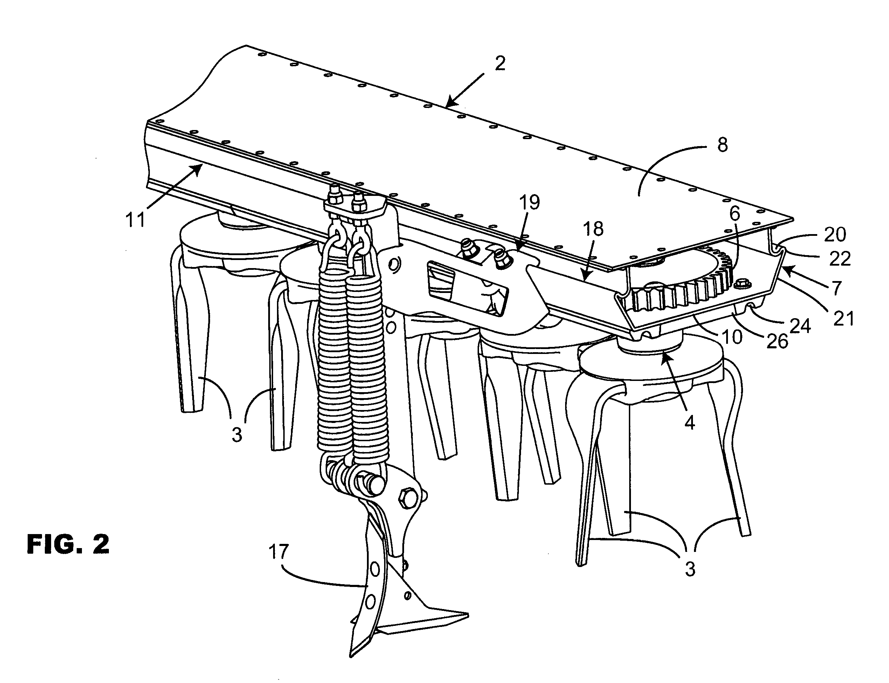

La figure 2 représente une partie de la machine selon une vue en perspective. La glissière longitudinale (18) s'étend au moins sur une partie de la longueur de la poutre (7). Lorsque la glissière longitudinale (18) s'étend sur toute la longueur de la poutre (7), une adaptation précise, en continu et sans limitation, de la position latérale de l'équipement par rapport au tracteur et/ou à la machine (1) est possible. Sur cette figure, la herse rotative est munie à l'avant du carter (2) d'un équipement tel qu'un effaceur de traces (17). Cet effaceur de traces (17) est monté sur la glissière (18) de manière à ce que sa position latérale puisse être réglée en fonction de la voie du tracteur et de la largeur de ses pneumatiques. Il est d'usage de mettre un effaceur de traces (17) derrière chaque roue arrière du tracteur (non représenté) et de le positionner sensiblement au centre du pneumatique. L'effaceur de traces (17) atténue les sillons laissés par les roues du tracteur. L'effaceur de traces (17) est alors maintenu en position grâce au dispositif de fixation (19). Lorsque le tracteur est équipé de roues jumelées, la herse rotative sera munie de quatre effaceurs de traces (17). Grâce au montage sur la glissière (18), chaque effaceur de traces (17) peut être déplacé par coulissement en continu et sans limitation pour que son travail soit efficace. L'adaptation de la position est rapide puisque le dispositif de fixation (19) est simplement desserré pour être déplacé, il n'y a pas de démontage complet.

Pour améliorer le maintien ainsi que le coulissement de l'équipement, la glissière longitudinale (18) présente au moins une rainure (20). La rainure (20) est présente sur au moins une partie de la glissière (18), de préférence sur toute la longueur. Le diamètre de la rainure (20) est tel qu'il permet de recevoir le dispositif de fixation (19) de l'équipement pour permettre sa fixation. Pour faciliter la manipulation, la glissière (18) présente une rainure supérieure (20) dans laquelle repose le dispositif de fixation (19).

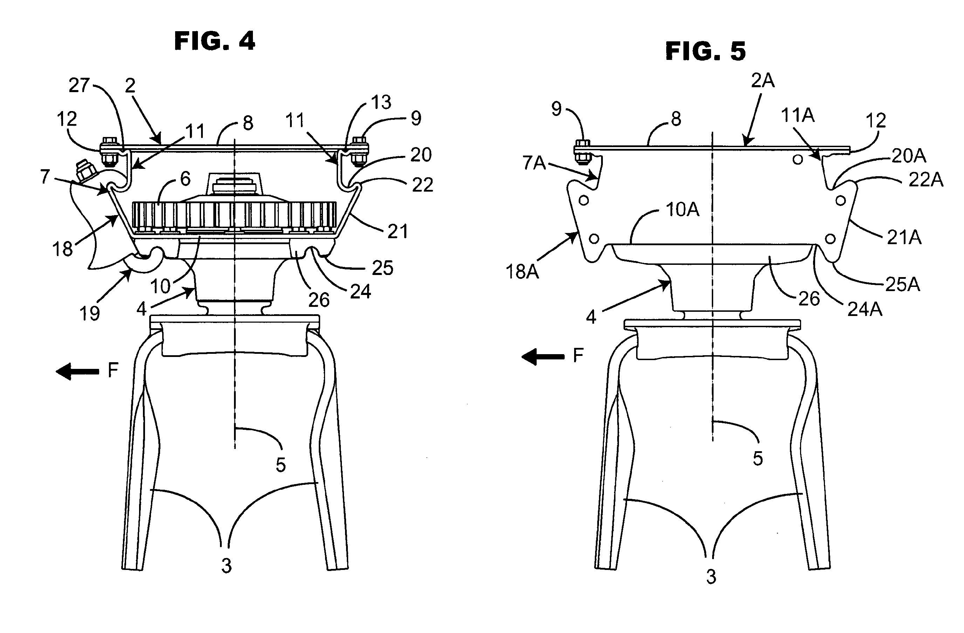

A la lumière de la figure 4, le flanc (11) de la poutre (7) présente une portion inclinée (21) par rapport à la verticale. Cette portion inclinée (21) est orientée de manière à ce que la terre qui est soulevée par la rotation des outils de travail (3) soit repoussée vers le sol. La portion inclinée (21) est destinée à favoriser l'écoulement de la terre sous la poutre (7). La portion inclinée (21) s'étend à l'avant de la poutre (7). La portion inclinée (21) est orientée de manière à ce que sa partie inférieure soit plus proche du plan vertical médian que sa partie supérieure. La portion inclinée (21) réalise une face de guidage pour le dispositif de fixation (19) de l'équipement. La portion inclinée (21) fait partie de la glissière (18). La glissière longitudinale (18) présente également un pli (22). Le pli (22) sépare la rainure (20) et la portion inclinée (21). Le pli (22) permet un changement de direction de la rainure (20) par rapport à la portion inclinée (21). Selon le procédé de réalisation de la poutre (7), ce pli (22) sera plus ou moins fermé et son rayon sera plus ou moins petit. Dans l'exemple de réalisation de la figure 4, le flanc (11) de la poutre (7) s'étend globalement verticalement. Il présente, de haut en bas, une partie sensiblement verticale, une rainure (20), un pli (22) et une portion inclinée (21).

D'une manière avantageuse, le profil de la poutre (7) intègre la glissière longitudinale (18). La poutre (7) est mise en oeuvre dans une opération de profilage à froid. Ainsi, la glissière longitudinale (18), avec la rainure (20), le pli (22) et la portion inclinée (21), est mise en oeuvre dans une opération de profilage à froid. Le profilage à froid est un processus de mise en forme en continu qui permet, à partir de tôles planes en feuilles ou en bobine, d'obtenir des produits de section constante. Le feuillard subit des déformations progressives jusqu'à obtenir les angles et la forme souhaités. Un avantage du profilage par rapport au pliage est que la forme est obtenue sans que soit modifiée son épaisseur initiale. Grâce au profilage à froid, le pli (22) est pratiquement fermé et son angle est petit. Un pli pratiquement fermé correspond à un angle inférieur à 30°. En pliage, il n'est techniquement pas possible d'obtenir un tel résultat.

Pour améliorer la qualité de travail de la herse rotative, des équipements complémentaires peuvent être associés aux outils de travail (3) et à l'organe de référence (16). La machine (1) représentée sur la figure 1 comporte des effaceurs de traces (17) décrits précédemment et une planche niveleuse (23) montée à l'arrière de la poutre (7). La planche niveleuse (23) arrière retient les mottes à portée des outils de travail (3) jusqu'à ce qu'elles soient suffisamment réduites pour s'échapper. Une telle planche niveleuse (23) peut également être montée à l'avant de la poutre (7), elle a alors pour fonction de briser les grosses mottes et niveler le sol devant les outils de travail (3). La planche niveleuse avant contribue à l'émiettement en éclatant les mottes projetées par les outils de travail (3). La machine agricole de travail du sol (1) est également équipée de protecteurs frontaux de part et d'autre du cadre (14) pour éviter un accès aux outils de travail (3) qui sont entraînés en rotation autour d'un axe vertical respectif (5). Les protecteurs frontaux ne sont pas représentés sur les figures. La herse rotative peut encore être équipée d'un bouclier anti-pierres (non représenté) qui a pour rôle de protéger la base (10) de la poutre (7) en empêchant les cailloux de venir se bloquer entre la poutre (7) et les porte-outils. Chacun de ces équipements (17, 23) est destiné à être monté via la glissière longitudinale (18) sur le flanc (11) de la poutre (7).

Dans l'exemple de réalisation des figures 1 à 4, la poutre (7) présente une glissière longitudinale (18) sur chacun de ses flancs (11). Les équipements avant sont montés sur la glissière avant et les équipements arrière sont fixés sur la glissière arrière, compte tenu de la direction d'avance (F) au travail. Le bouclier anti-pierres est, quant à lui, maintenu grâce à la glissière avant et à la glissière arrière et notamment grâce leurs rainures supérieures (20) respective. Le profil de la poutre (7) est avantageusement symétrique par rapport au plan vertical médian passant par l'axe vertical (5) des rotors (4). Les portions inclinées (21) des deux flancs (11) forment ensemble avantageusement un V ouvert vers le haut. Le profil de la poutre symétrique est avantageusement conformé en Ω renversé.

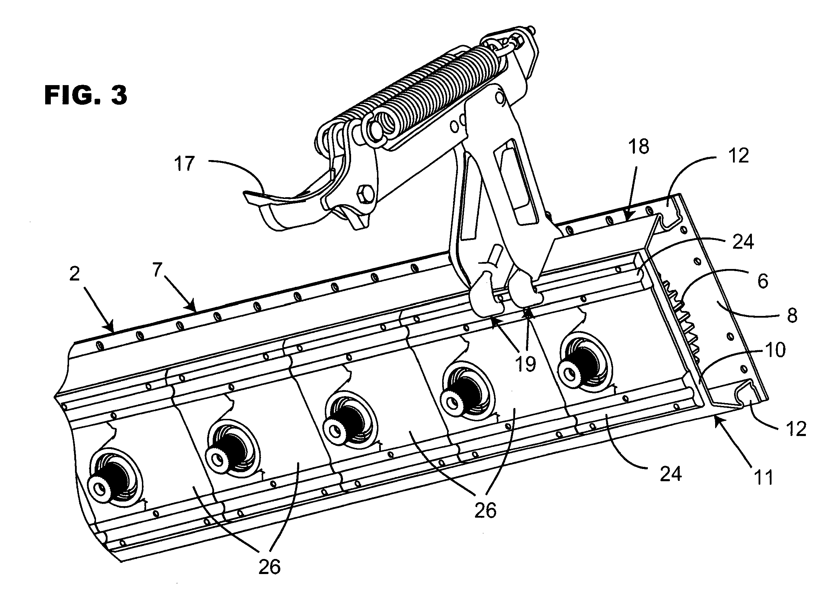

D'après les figures, le montage d'un équipement (17, 23) sur la poutre (7) est réalisé par pincement de la glissière (18) via le dispositif de fixation (19). La glissière (18) présente également une rainure inférieure (24) avec un pli inférieur (25). Le dispositif de fixation (19) est ainsi logé dans la rainure supérieure (20) et dans la rainure inférieure (24). La position de la rainure inférieure (24) est telle que son centre est disposé sur une droite parallèle à la portion inclinée (21) et passant par le centre de la rainure supérieure (20). La rainure inférieure (24) s'étend en dessous de la rainure supérieure (20). Dans l'exemple de réalisation des figures 1 à 4, des paliers (26) supportant les rotors (4) sont fixés sous la poutre (7), notamment sur la base (10). La rainure inférieure (24) est avantageusement ménagée dans les paliers (26). On remarque également que la section transversale de la glissière (18) est conformée en Ω dont la base est la portion inclinée (21). Selon l'exemple de réalisation représenté à la figure 3, les paliers (26) sont dimensionnés de manière à être jointifs et former une rainure inférieure (24) en continue sur toute la largeur. Dans une alternative non représentée, les paliers (26) ne sont pas jointifs et la rainure inférieure (24) est discontinue.

Le dispositif de fixation (19) est composé d'une bride et d'un tirant en forme de crochet. Le tirant permet de serrer la bride sur la glissière (18) par l'intermédiaire de sa tige filetée et d'un écrou. Pour un bon maintien et positionnement sur la glissière (18), la bride et le tirant épousent la forme de la glissière (18). La bride présente une face destinée à s'appuyer contre la portion inclinée (21). La bride est destinée à s'accrocher dans la rainure supérieure (20) ainsi elle présente une forme complémentaire. Le tirant est destiné à s'accrocher dans la rainure inférieure (24), il présente une forme complémentaire à la rainure inférieure (24).

La figure 5 représente un autre exemple de réalisation d'un carter (2A) selon l'invention. Ce carter (2A) comporte un certain nombre d'éléments qui ont été décrits précédemment. Ces éléments garderont le même numéro de repère et ne seront pas redécrits. Il comporte également un certain nombre d'éléments qui sont comparables à des éléments du carter (2) décrit précédemment. Ces éléments seront affectés du même numéro de repère que ces éléments comparables du carter (2) suivi de la lettre A. Ils ne seront décrits que si cela s'avère nécessaire. Le carter (2A) est semblable à celui décrit auparavant. La différence réside dans le fait que le profil de la poutre (7A) intègre la rainure inférieure (24A) de la glissière longitudinale (18A).

Le carter (2A) est représenté en vue de côté avec la poutre (7A) dont les extrémités sont fermées par une plaque d'extrémité respective. Le carter (2A) présente un couvercle (8) assemblé via des moyens de fixation (9). Cette poutre (7A) présente au moins une glissière longitudinale (18A) apte à recevoir un équipement (17, 23). La glissière (18A) s'étend sur au moins une partie du flanc (11A) de la poutre. Cette glissière (18A) présente une rainure supérieure (20A) et une rainure inférieure (24A) qui sont réalisées via le profil de la poutre (7A). Les paliers (26A) sont exempts de la rainure inférieure. On remarque que l'angle des plis (22A, 25A) est moins fermé et présente un rayon plus important que les plis (22, 25). L'angle des plis (22A, 25A) est inférieur à 50°. Un tel profil peut également être obtenu par profilage à froid.

Dans une alternative non représentée, la glissière longitudinale est obtenue par soudage d'une pièce rapportée sur le flanc de la poutre. Cette pièce rapportée comprend alors une portion inclinée, au moins un pli et au moins une rainure. Une telle glissière rapportée peut être soudée à l'avant et/ou à l'arrière de la poutre sur toute ou partie de sa longueur. Dans une autre alternative, la glissière longitudinale est boulonnée sur le flanc de la poutre.

Conformément aux différents exemples de réalisation pour lesquels la poutre (7 ; 7A) est obtenue par profilage à froid, cette dernière est pourvue d'une gorge (27) apte à recevoir le moyen d'étanchéité (13). D'une manière avantageuse, la gorge (27) est obtenue durant l'opération de profilage à froid de la glissière longitudinale (18 ; 18A). Cette gorge (27) s'étend à l'extérieur du flanc (11) de la poutre (7 ; 7A), entre le flanc (11 ; 11A) et les perçages recevant les moyens de fixation (9). Le moyen d'étanchéité (13) est avantageusement formé d'une seule pièce, il s'agit d'un joint torique.

La machine agricole (1) conforme à l'invention peut être une machine rigide ou une machine repliable en au moins deux parties.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine de travail du sol (1) comportant un carter (2 ; 2A) transversal à la direction d'avance (F) durant le travail, supportant des outils de travail (3) montés sur des rotors (4) susceptibles de tourner autour d'un axe respectif sensiblement vertical (5), ledit carter (2 ; 2A) présentant une poutre (7 ; 7A), ***caractérisée en ce que*** ladite poutre (7 ; 7A) présente au moins une glissière longitudinale (18 ; 18A) apte à recevoir au moins un équipement (17, 23), ladite glissière longitudinale (18 ; 18A) s'étend au moins sur une partie du flanc (11 ; 11A) de ladite poutre (7 ; 7A) et présente au moins une rainure (20, 24 ; 20A, 24A).

2. Machine de travail du sol selon la revendication 1, ***caractérisée en ce que*** ladite glissière longitudinale (18 ; 18A) présente une portion inclinée (21 ; 21A) par rapport à la verticale.

3. Machine de travail du sol selon la revendication 2, ***caractérisée en ce* que** ladite portion inclinée (21 ; 21A) est orientée pour que sa partie inférieure soit plus proche du plan vertical médian que sa partie supérieure.

4. Machine de travail du sol selon l'une quelconque des revendications 1 à 3, ***caractérisée en ce que*** ladite glissière longitudinale (18 ; 18A) présente un pli (22 ; 22A) séparant ladite portion inclinée (21 ; 21A) de ladite rainure (20, 24 ; 20A, 24A) respective.

5. Machine de travail du sol selon l'une quelconque des revendications 1 à 4, ***caractérisée en ce que*** le profil de ladite poutre (7 ; 7A) intègre ladite glissière longitudinale (18 ; 18A).

6. Machine de travail du sol selon l'une quelconque des revendications 1 à 5, ***caractérisée en ce que*** ladite poutre (7 ; 7A) est mise en oeuvre dans une opération de profilage à froid.

7. Machine de travail du sol selon l'une quelconque des revendications 1 à 6, ***caractérisée en ce que*** ladite glissière longitudinale (18 ; 18A) présente une rainure supérieure (20 ; 20A).

8. Machine de travail du sol selon l'une quelconque des revendications 1 à 7, ***caractérisée en ce que*** ladite glissière longitudinale (18 ; 18A) présente une rainure inférieure (24 ; 24A).

9. Machine de travail du sol selon l'une quelconque des revendications 1 à 8, ***caractérisée en ce que*** des paliers (26) supportant les rotors (4) sont fixés sous ladite poutre (7 ; 7A) et que ladite rainure inférieure (24 ; 24A) est ménagée dans lesdits paliers (26).

10. Machine de travail du sol selon la revendication 9, ***caractérisée en ce que*** lesdits paliers (26) sont jointifs et que ladite rainure inférieure (24 ; 24A) s'étend en continue.

11. Machine de travail du sol selon l'une quelconque des revendications 1 à 10, ***caractérisée en ce que*** le profil de ladite poutre (7 ; 7A) est symétrique par rapport à un plan médian vertical passant par l'axe sensiblement vertical (5).

12. Machine de travail du sol selon l'une quelconque des revendications 1 à 11, ***caractérisée en ce que*** le profil de ladite poutre (7 ; 7A) est conformée en Ω renversé.

13. Machine de travail du sol selon l'une quelconque des revendications 1 à 12, ***caractérisée en ce que*** ledit carter présente une partie supérieure sensiblement plane.

14. Machine de travail du sol selon l'une quelconque des revendications 1 à 13, ***caractérisée en ce que*** ladite au moins une rainure (20, 24 ; 20A, 24A) est apte à recevoir un dispositif de fixation (19).

## Patentansprüche

1. Bodenbearbeitungsmaschine (1) mit einem Gehäuse (2; 2A), dass sich bei der Arbeit quer zur Vorschubrichtung (F) erstreckt, welches Arbeitswerkzeuge (3) trägt, die auf Rotoren (4) montiert sind, die geeignet sind, sich um eine jeweilige im Wesentlichen vertikale Achse (5) zu drehen, wobei das Gehäuse (2; 2A) einen Träger (7; 7A) aufweist, ***dadurch gekennzeichnet*, dass** der Träger (7; 7A) mindestens eine Längsschiene (18; 18A) aufweist, die geeignet ist, mindestens eine Ausrüstung (17, 23) aufzunehmen, wobei sich die Längsschiene (18; 18A) zumindest auf einem Teil der Seite (11; 11A) des Trägers (7; 7A) erstreckt und mindestens eine Nut (20, 24; 20A, 24A) aufweist.

2. Bodenbearbeitungsmaschine nach Anspruch 1, ***dadurch gekennzeichnet,* dass** die Längsschiene (18; 18A) einen zur Vertikalen geneigten Abschnitt (21; 21A) aufweist.

3. Bodenbearbeitungsmaschine nach Anspruch 2, ***dadurch gekennzeichnet,* dass** der geneigte Abschnitt (21; 21A) derart ausgerichtet ist, dass sein unterer Teil näher zur vertikalen Mittelebene ist als sein oberer Teil.

4. Bodenbearbeitungsmaschine nach irgend einem der Ansprüche 1 bis 3, ***dadurch gekennzeichnet*, dass** die Längsschiene (18; 18A) einen Falz (22; 22A) aufweist, der den geneigten Abschnitt (21; 21 A) von der jeweiligen Nut (20, 24; 24A, 24A) trennt.

5. Bodenbearbeitungsmaschine nach irgend einem der Ansprüche 1 bis 4, ***dadurch gekennzeichnet*, dass** das Profil des Trägers (7; 7A) die Längsschiene (18; 18A) umfasst.

6. Bodenbearbeitungsmaschine nach irgend einem der Ansprüche 1 bis 5, ***dadurch gekennzeichnet*, dass** der Träger (7; 7A) in einem Profilierungsverfahren durch Kaltwalzen eingesetzt wird.

7. Bodenbearbeitungsmaschine nach irgend einem der Ansprüche 1 bis 6, ***dadurch gekennzeichnet*, dass** die Längsschiene (18; 18A) eine obere Nut (20; 20A) aufweist.

8. Bodenbearbeitungsmaschine nach irgend einem der Ansprüche 1 bis 7, ***dadurch gekennzeichnet*, dass** die Längsschiene (18; 18A) eine untere Nut (24; 24A) aufweist.

9. Bodenbearbeitungsmaschine nach irgend einem der Ansprüche 1 bis 8, ***dadurch gekennzeichnet*, dass** die Lager (26), die die Rotoren (4) tragen, unter dem Träger (7; 7A) befestigt sind, und dass die untere Nut (24; 24A) in den Lagern (26) vorgesehen ist.

10. Bodenbearbeitungsmaschine nach Anspruch 9, ***dadurch gekennzeichnet,* dass** die Lager (26) aneinander grenzen, und dass sich die untere Nut (24; 24A) kontinuierlich erstreckt.

11. Bodenbearbeitungsmaschine nach irgend einem der Ansprüche 1 bis 10, ***dadurch gekennzeichnet*, dass** das Profil des Trägers (7; 7A) in Bezug zu einer vertikalen Mittelebene, die durch die im Wesentlichen vertikale Achse (5) verläuft, symmetrisch ist.

12. Bodenbearbeitungsmaschine nach irgend einem der Ansprüche 1 bis 11, ***dadurch gekennzeichnet*, dass** das Profil des Trägers (7; 7A) in Form eines umgekehrten Ω ausgeführt ist.

13. Bodenbearbeitungsmaschine nach irgend einem der Ansprüche 1 bis 12, ***dadurch gekennzeichnet*, dass** das Gehäuse einen im Wesentlichen flachen oberen Teil aufweist.

14. Bodenbearbeitungsmaschine nach irgend einem der Ansprüche 1 bis 13, ***dadurch gekennzeichnet*, dass** die mindestens eine Nut (20, 24; 20A, 24A) geeignet ist, eine Befestigungsvorrichtung (19) aufzunehmen.

## Claims

1. Soil working machine (1) comprising a gearbox (2; 2A) transverse to the direction of advance (F) during work, supporting work tools (3) mounted on rotors (4) able to rotate about a respective substantially vertical axis (5), the said gearbox (2; 2A) having a beam (7; 7A), ***characterized in* that** the said beam (7; 7A) has at least one longitudinal slide (18; 18A) suited to receive at least one piece of equipment (17, 23), the said longitudinal slide (18; 18A) extends at least over a portion of the side (11; 11A) of the said beam (7; 7A) and has at least one groove (20, 24; 20A, 24A).

2. Soil working machine according to Claim 1, ***characterized in* that** the said longitudinal slide (18; 18A) has a portion (21; 21 A) inclined with respect to the vertical.

3. Soil working machine according to Claim 2, ***characterized in* that** the said inclined portion (21; 21 A) is oriented such that its lower part is closer to the median vertical plane than its upper part.

4. Soil working machine according to any one of Claims 1 to 3, ***characterized in* that** the said longitudinal slide (18; 18A) has a fold (22; 22A) separating the said inclined portion (21; 21A) from the said respective groove (20, 24; 20A, 24A).

5. Soil working machine according to any one of Claims 1 to 4, ***characterized in* that** the section of the said beam (7; 7A) integrates the said longitudinal slide (18; 18A).

6. Soil working machine according to any one of Claims 1 to 5, ***characterized in* that** the said beam (7; 7A) is implemented in a cold shaping operation.

7. Soil working machine according to any one of Claims 1 to 6, ***characterized in* that** the said longitudinal slide (18; 18A) has an upper groove (20; 20A).

8. Soil working machine according to any one of Claims 1 to 7, ***characterized in* that** the said longitudinal slide (18; 18A) has a lower groove (24; 24A).

9. Soil working machine according to any one of Claims 1 to 8, ***characterized in* that** bearings (26) supporting the rotors (4) are fixed beneath the said beam (7; 7A) and that the said lower groove (24; 24A) is arranged in the said bearings (26).

10. Soil working machine according to Claim 9, ***characterized in* that** the said bearings (26) are in close contact and that the said lower groove (24; 24A) extends continuously.

11. Soil working machine according to any one of Claims 1 to 10, ***characterized in* that** the section of the said beam (7; 7A) is symmetrical with respect to a vertical median plane passing through the substantially vertical axis (5).

12. Soil working machine according to any one of Claims 1 to 11, ***characterized* in that** the section of the said beam (7; 7A) is shaped as an inverted Ω.

13. Soil working machine according to any one of Claims 1 to 12, ***characterized in* that** the said gearbox has a substantially flat upper part.

14. Soil working machine according to any one of Claims 1 to 13, ***characterized in* that** the said at least one groove (20, 24; 20A, 24A) is suited to receive a fixing device (19).
